**Europäisches Patentamt**

**European Patent Office**

**Office européen des brevets**

(11) Veröffentlichungsnummer: **0 375 601**

**A1**

(12) **EUROPÄISCHE PATENTANMELDUNG**

(21) Anmeldenummer: **89810466.6**

(22) Anmeldetag: **16.06.89**

(51) Int. Cl.5: **G01B 1/00, B23Q 11/00,**
**E04C 5/08, E04C 3/29**

(30) Priorität: **01.07.88 CH 2513/88**

(43) Veröffentlichungstag der Anmeldung:
**27.06.90 Patentblatt 90/26**

(84) Benannte Vertragsstaaten:
**AT BE CH DE FR GB IT LI LU NL SE**

(71) Anmelder: **Weber, Hans Rudolf**
**10, chemin du Grillon**
**CH-1007 Lausanne(CH)**

(72) Erfinder: **Weber, Hans Rudolf**
**10, chemin du Grillon**
**CH-1007 Lausanne(CH)**

(74) Vertreter: **Gasser, François W.**
**Laupenstrasse 8 Postfach**
**CH-3001 Bern(CH)**

(54) **Stabförmiges Konstruktionselement mit hoher Biegesteifigkeit und Verwendung desselben.**

(57) Im Maschinen- und Werkzeugbau werden oft leichte aber sehr steife Konstruktionselemente mit hoher Biegesteifigkeit benötigt, insbesondere als Bauteile, die trotz nicht unterstützter freier Länge möglichst wenig Durchbiegung aufweisen. Beispielsweise bei Messinstrumenten für grosse Längen stellt sich das Problem, dass die Schiene (1) auch bei ganzlängiger nichtunterstützter Verwendung und unter Einwirkung äusserer Kräfte möglichst keinerlei Durchbiegung aufweisen sollte, um das Messergebnis nicht zu verfälschen. Zu diesem Zweck weist ein erfindungsgemässes Konstruktionselement mehrere Elementkörper (2) aus z.B. Keramik auf, die durch Vorspannmittel (3) oder Verbundmittel zu einem biegesteifen Bauteil zusammengefasst sind. Dieser Aufbau verhindert, dass die Keramikelemente beim Einwirken von übermässigen Biegemomenten brechen, da sie sich gegeneinander verkanten bzw. verschieben können. Die Elementkörper (2) und Vorspannmittel (3) können in einen Block gelegt werden, der aussen mit einer auch teilweisen Umhüllung versehen sein kann.

# STABFOERMIGES KONSTRUKTIONSELEMENT MIT HOHER BIEGESTEIFIGKEIT UND VERWENDUNG DES-SELBEN

Die vorliegende Erfindung betrifft ein stabförmiges Konstruktionselement mit hoher Biegesteifigkeit gemäss dem Oberbegriff des Patentanspruchs 1.

Bei der Realisierung mechanischer Konstruktionen, insbesondere im Maschinen- und Werkzeugbau, besteht oft die Notwendigkeit, Konstruktionselemente mit hoher Biegesteifigkeit, also biegesteife Elemente, zu verwenden, die auch bei grosser horizontaler Ausdehnung und insbesondere grosser freier, nicht unterstützter Länge, möglichst wenig Durchbiegung aufweisen. Allgemein gelten Rohre, Verstrebungen und Fachwerkkonstruktionen als biegesteife Konstruktionselemente. Für viele Anwendungen eignen sich derartige herkömmliche biegesteife Konstruktionselemente allerdings nicht, da sie zu schwer und/oder in ihrer Herstellung zu teuer sind. Für die Herstellung leichter biegesteifer Konstruktionselemente werden glas- oder kohlefaserverstärkte Kunststoffe verwendet, die aber wegen ihrer teilweise ungünstigen Temperaturkoeffizienten und ihrer materialinherenten Restflexibilität ebenfalls nicht in jedem Falle zu befriedigenden Ergebnissen führen. Andererseits werden gerade solche faserverstärkten Kunststoffe zur Herstellung von Bauteilen verwendet, bei welchen eine Flexibilität erwünscht ist, wie z.B. Skis und Flügel für Segelflugzeuge. Andere biegesteife Konstruktionselemente sind vorgespannte Bauteile, wobei es sich dabei in der Regel um massive Konstruktionen, beispielsweise aus Beton, handelt, die mittels Stahlseilen oder -stangen vorgespannt werden. Sie eignen sich in der Regel nicht für den Maschinen- und Werkzeugbau und werden vorwiegend in Gebäude- und Brückenkonstruktionen eingesetzt. Als Werkstoff für leichte biegesteife Bauteile grosser Festigkeit eignet sich an sich Keramik, wobei Keramikteile allerdings den Nachteil aufweisen, dass sie bei übermässiger Belastung relativ leicht brechen und auch gegen Schläge empfindlich sind. Sie sind daher insbesondere im Maschinen- und Werkzeugbau nur bedingt einsetzbar.

Der vorliegenden Erfindung liegt die Aufgabe zugrunde, ein stabförmiges Konstruktionselement mit hoher Biegesteifigkeit zu schaffen, das die Nachteile der bekannten Konstruktionselemente dieser Art vermeidet und unter Berücksichtigung der angreifenden Kräfte ein optimales Querschnittsprofil bei kleinstmöglichem Gewicht und kleinstmöglicher Masse aufweist ohne bei übermässiger Belastung oder bei Schlägen bruchgefährdet zu sein und das sich kostengünstig industriell herstellen lässt, und das die Nachteile der bekannten Elemente dieser Art vermeidet.

Erfindungsgemäss wird diese Aufgabe durch ein stabförmiges Konstruktionselement gelöst, wie es im Patentanspruch 1 definiert ist.

Aufgrund der Tatsache, dass das Flächenmoment (Trägheitsmoment) eines rechteckigen Querschnittes in der 3. Potenz seiner Höhe zunimmt, kann es vorteilhaft sein, für ein erfindungsgemässes Konstruktionselement ein Element mit grosser Höhe und geringer Breite zu wählen. Die Durchbiegung eines solchen Elementes unter Einwirkung einer Kraft ist umgekehrt proportional zu seinem Elastizitätsmodul. Deshalb ist es zweckmässig, ein Material mit hohem Elastizitätsmodul bei geringer Dichte zu wählen. Diese Kriterien führen zu Keramit oder keramikähnlichen Materialien als Werkstoff. Unter dem Sammelbegriff Keramik ist eine Vielfalt von Werkstoffen mit unterschiedlichen, dem Verwendungszweck angepassten Eigenschaften bekannt, welch letztere beispielsweise vom nahezu perfekten Isolator bis zum Supraleiter reichen. Die meisten technischen Anwendungen machen sich die hohe Temperaturbeständigkeit, die günstigen Abnützungseigenschaften oder den hohen elektrischen Widerstand zu Nutzen. Für die in der Folge vorgeschlagene Verwendung interessiert vor allem die hohe Biegesteifigkeit, das hohe Elastizitätsmodul, die hohe Druckfestigkeit, der lineare thermische Ausdehnungskoeffizient und die geringe Dichte. Die Nachteile dieser Materialien, die insbesondere in ihrer Bruchfreudigkeit bei übermässigen Belastungen liegen, müssen allerdings durch geeignete, erfindungsgemässe konstruktive Massnahmen kompensiert werden.

Im Folgenden werden anhand der Zeichnung vorteilhafte Ausführungsvarianten der Erfindung beschrieben. In der Zeichnung zeigt

Fig. 1 einen Längsschnitt durch ein erfindungsgemässes stabförmiges Konstruktionselement in Form einer Schiene für Längenmessinstrumente,

Fig. 2 einen Querschnitt durch das stabförmige Konstruktionselement gemäss Fig. 1,

Fig. 3 weitere vorteilhafte Querschnitte für erfindungsgemässe stabförmige Konstruktionselemente, und

Fig. 4 eine Variante eines erfindungsgemässen Konstruktionselementes.

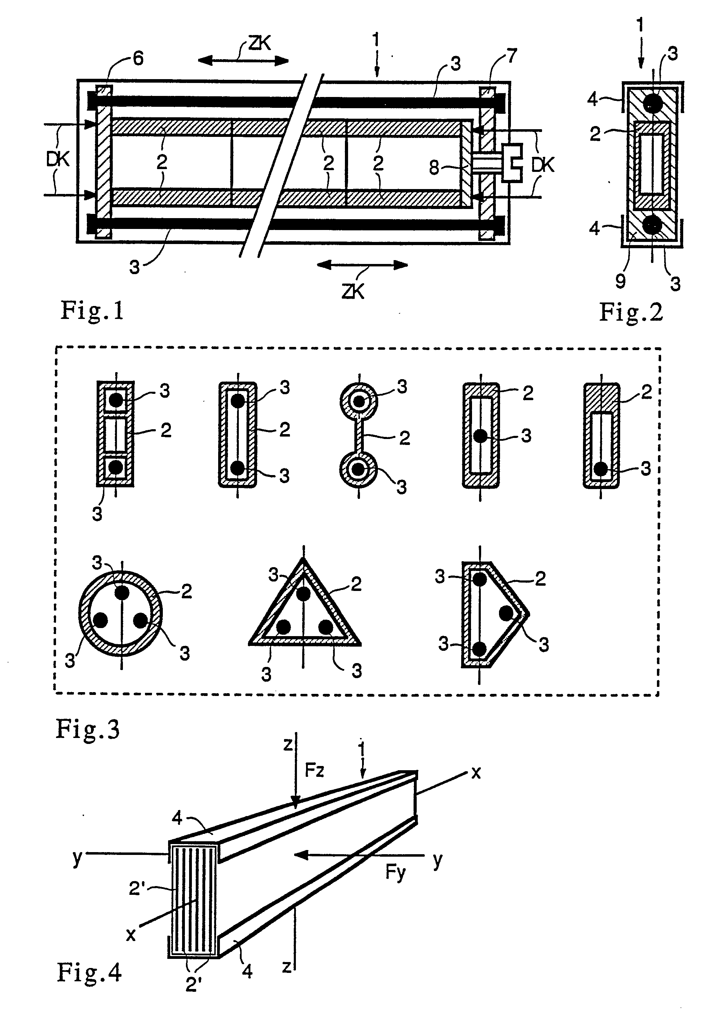

Die Schiene 1 nach Fig. 1 weist eine Mehrzahl von erfindungsgemäss aus Keramik oder keramikähnlichem Material hergestellten, vorteilhafterweise hohlen Elementkörpern 2 mit rechteckigem Querschnitt auf, die in Linie angeornet sind. Die aus einzelnen, an ihren Stirnseiten vorteilhafterweise plan geschliffenen Keramikteilen bestehende Elementkörperreihe bildet einen hohe Druckfestigkeit aufweisenden Bauteil geringer Dichte und wird, zwecks Verbindung zu einem biegesteifen Körper mit hohe Zugfestigkeit aufweisenden Vorspannmitteln zusammengehalten. Zu diesem Zwecke ist in der dargestellten Ausführungsvariante eines erfindungsgemässen stabförmigen Konstruktionselementes am einen Ende der Elementkörperreihe, in der Zeichnung am linken Ende, eine erste Endplatte 6 unmittelbar an den letzten Elementkörper 2 angeschlossen. Vorspannstähle 3 sind an der Endplatte 6 verankert, derart, dass die Endplatte 6 als Kraftübertragungsteil dient, das die durch das Vorspannen der Vorspannstähle 3 erzeugten Druckkräfte DK auf die Elementkörper 2 überträgt. Am anderen Ende der Elementkörperreihe ist eine zweite Endplatte 7 entweder direkt an den letzten Elementkörper 2 angeschlossen oder aber, wie in der Zeichnung dargestellt, über ein Einstellmittel, beispielsweise in Form einer Schraube 5, die sich auf eine Abschlussplatte 8 abstützt und sich unmittelbar an den letzten Elementkörper 2 anschliesst, angeordnet. Wie die erste Endplatte 6 dient auch die zweite Endplatte 7 den Vorspannstählen 3 als Verankerung. Die durch das Vorspannen der Vorspannstähle 3 zwischen den beiden Endplatten 6 und 7 entstehenden Druckkräfte DK werden auf dieser Seite der Elementkörperlinie über die in einem Gewinde in der zweiten Endplate 7 laufende Schraube 5 auf die Abschlussplatte 8 übertragen, derart, dass die einzelnen Elementkörper 2 zwischen der Endplatte 6 und der Abschlussplatte 8 eingeklemmt sind und einen festen, biegesteifen Bauteil bilden.

Die Vorspannmittel, hier in Form der Vorspannstähle 3, müssen nicht zwangsläufig über Einstellmittel, hier in Form der Schraube 5 und der Abschlussplatte 8, auf die Elementkörper 2 einwirken, da die zweite Endplatte 7 entsprechend der ersten Endplatte 6 unmittelbar auf dem äussersten Elementkörper 2 aufgesetzt werden kann. Die Verwendung von Einstellmitteln hat aber den Vorteil, dass eventuell ungleichmässige Spannungen in den Vorspannmitteln, hier den beiden Vorspannstählen 3, ausgeglichen werden können. Sie ermöglichen zudem ein präzises Einstellen der auf die Elementkörper 2 einwirkenden Druckkräfte DK. Es ist selbstverständlich, dass zur Erzeugung der für das Bilden des biegesteifen Bauteils aus den aneinandergereihten Elementkörpern 2 benötigten Vorspannmittel sich von den hiervor beschriebenen unterscheiden können. Je nach Art und Verwendung des Konstruktionselementes können mechanische, hydraulische, thermische oder andere adäquate Vorspannmittel verwendet werden, die in unterschiedlichsten Arten ihre Zugkräfte ZK als Druckkräfte DK auf die Elementkörperreihe übertragen.

Wie hiervor erwähnt, bestehen die Elementkörper 2 aus Keramik oder keramikähnlichem Material, da Keramikkörper bei niedrigem spezifischem Gewicht eine sehr hohe Festigkeit, insbesondere Druckfestigkeit und eine hohe Steifigkeit, insbesondere Biege- und Verwindungssteifigkeit aufweisen. Zudem kann der Temperaturkoeffizient von Keramik so eingestellt werden, dass er jenem des für die Vorspannmittel, insbesondere von Vorspannstählen verwendeten Materials entspricht, so dass die Vorspannung der Elementkörperreihe über den ganzen relevanten Temperaturbereich unverändert bleibt, oder dass das fertige Konstruktionselement den gewünschten Temperaturkoeffizienten aufweist. Weiter weisen Keramikkörper den Vorteil auf, dass sie kostengünstig in grossen Serien herstellbar sind und in Längsrichtung keiner mechanischen Bearbeitung bedürfen. Lediglich ihre Stirnseiten müssen planparallel bearbeitet werden. Da Keramik aber spröde ist, so dass bereits bei kleinen Verformungen und leichten Schlägen das Risiko besteht, dass es bricht, ist es empfehlenswert, mehrere kurze Elementkörper 2 aneinanderzureihen, um die benötigte Länge der Schiene 1 zu erreichen. Da kurze Keramikkörper einfacher und billiger sind als lange, bietet dies zusätzliche wirtschaftliche Vorteile. Auf das segmentartig so aufgebaute Konstruktionselement einwirkende unvorhergesehene und seine Biegefestigkeit übersteigende seitliche Kräfte, die zu einem Biegemoment, also zu einer Verformung der Schiene 1 in einer Ebene, d.h. zu einer Verbiegung der Schiene 1 führen, können die aus Keramik oder keramikähnlichem Material bestehenden Elementkörper 2 nicht zerbrechen, da sie sich gegenüber einander entgegen den in Längsrichtung auf sie einwirkenden Vorspannkräften, d.h. den Zugkräften ZK, resp. den Druckkräften DK verkanten können. Das erfindungsgemässe stabförmige Konstruktionselement ist daher einerseits durch die Vorspannung und die verwendeten Materialien bei leichtem Gewicht ausserordentlich biege- und verwindungssteif, kann aber andererseits übermässige Verformungskräfte in Form von seitlich darauf einwirkenden Querkräften schadlos aufnehmen.

Aus Fig. 2 erkennt man, dass bei Bedarf das erfindungsgemässe Konstruktionselement, hier die Schiene 1, insbesondere wenn es sich um ein sichtbares Teil in einer Maschine oder einem Werkzeug, beispielsweise um eine Schiene für Längenmessinstrumente handelt, vorteilhafterweise mit Füllmaterial, z.B. aus Kunststoff, zu einem Block 9 geformt werden kann. Um den unter Umständen gegen mechanische Beschädigungen empfindlichen Kunststoffblock 9, in dem die Elementkörper 2 und die Vorspannstähle 3 sowie gegebenenfalls die Einstellmittel 5 und 8 eingebettet sind, gegen Beschädigungen zu schützen und bei Bedarf eine zusätzliche mechanische Steifigkeit des stabförmigen Konstruktionselementes zu bewirken, wird der Block 9 vorteilhafterweise mit einer Umhüllung versehen, bei der es sich um ein einteiliges metallisches Profil oder aber, wie in der Zeichnung dargestellt, beispielsweise um zwei metallene Kantenbleche 4 handeln kann.

Bei der hiervor beschriebenen Ausführungsvariante eines erfindungsgemässen Konstruktionselementes, hier eine Schiene 1 für Messinstrumente, handelt es sich um ein vorgespanntes Element, das im wesentlichen aus mehreren linear aneinandergereihten, hohe Druckfestigkeit aufweisenden Elementkörpern 2 aus Keramik oder keramikähnlichen Material mit kleinem spezifischen Gewicht und hohe Zugfestigkeit aufweisenden Vorspannmitteln, hier in Form von Vorspannstählen 3. Diese erfindungsgemässe Kombination von Keramikkörpern mit Vorspannmitteln sowie gegebenenfalls einer mechanisch festen Umhüllung ermöglicht eine Optimierung der Form des Keramik-und Konstruktionselementeprofils unter Berücksichtigung der angreifenden Kräfte und des totalen Gewichtes, bzw. der Masse des Konstruktionselementes sowie dessen industrieller Herstellbarkeit. Die Einstellmittel für das Einstellen der Vorspannung, hier in Form der Schraube 5 und der Abschlussplatte 8, ermöglichen es, die Vorspannung der Elementkörperreihe den zu erwartenden Kräften optimal anzupassen. Das Einbetten der Elementkörperreihe und der Vorspannmittel in einen Block, beispielsweise mittels Kunststoff, ermöglicht den Schutz der wesentlichen Bauteile vor äusseren Einflüssen und die ästhetische Anpassung des Konstruktionselementes an den vorgesehenen Einsatzbereich. Abhängig von Lezterem kann das erfindungsgemässe Konstruktionselement weiter mit einer ein- oder mehrteiligen Umhüllung versehen werden, die sowohl mechanische als auch ästetische Aufgaben erfüllen kann.

Je nach Verwendungsart des erfindungsgemässen Konstruktionselementes und/oder in Abhängigkeit der zu erwartenden darauf einwirkenden Kräfte kann ein anderer als der hiervor beschriebene rechteckige Querschnitt der Elementkörper 2 vorteilhaft sein. Dabei kann es angezeigt erscheinen, weniger oder mehr als zwei Vorspannstähle 3 oder ähnliche Vorspannmittel zu verwenden. In Fig. 3 sind einige vorteilhafte Querschnitte dargestellt, wobei jene in der oberen Reihe vorwiegend für die Aufnahme von lediglich in einer Ebene angreifenden Querkräften bestimmt sind, wogegen die in der unteren Reihe dargestellten Querschnitte in verschiedenen Richtungen angreifende Querkräfte auffangen können.

Das erfindungsgemässe Konstruktionselement weist sich insbesondere dadurch aus, dass es bei minimalstem Gewicht eine optimale Biegesteifigkeit aufweist und dank seinem segmentartigen vorgespannten Aufbau beim Auftreten übermässiger Verformungskräfte trotzdem nicht zerbricht. Es ist naheliegend, dass sich erfindungsgemässe Konstruktionselemente nicht nur, wie hiervor beschrieben, vorteilhaft als Schienen für Messwerkzeuge für grosse Längen, insbesondere Schiebelehren, einsetzen lassen. Im Gegenteil lassen sie sich insbesondere im Maschinen- und Werkzeugbau überall dort vorteilhaft einsetzen, wo biegesteife und leichtgewichtige lineare Bauteile benötigt werden. Dabei können die Elementkörper und damit die erfindungsgemässen stabförmigen Konstruktionselemente wie hiervor anhand der Fig. 3 erwähnt, selbstverständlich auch einen anderen als den dargestellten rechteckigen Querschnitt aufweisen, je nach dem, mit welchen Quer- oder Verformungskräften gerechnet werden muss. Auch können die Vorspannmittel innerhalb von Hohlräumen der Elementkörper verlaufen. Es können mehr oder weniger als zwei Vorspannstähle oder ähnliche Vorspannmittel, verwendet werden. In Abhängigkeit der zu erwartenden oder vom Konstruktionselement schadlos zu überstehenden Verformungsund Biegekräften, können die Vorspannung und die Länge der einzelnen Elementkörper individuell gewählt werden. Das gegebenenfalls für das Ausgiessen oder Umpressen des erfindungsgemässen Konstruktionselementes verwendete Material, vorteilhafterweise Kunststoff, kann ebenfalls in Abhängigkeit des vorgesehenen Verwendungszweckes ausgewählt werden. Dies trifft auch auf die möglicherweise notwendige Umhüllung zu.

Die Fig. 4 zeigt eine andere Ausführungsform eines erfindungsgemässen Konstruktionselementes. Dieses ist als Verbundelement aufgebaut, bei dem dünne, dafür hohe lamellenförmige Elementkörper 2' seitlich aneinandergereiht und mit Klebstoff oder anderem Füllmaterial zusammengehalten werden. Da die hohe Biegesteifigkeit in vielen Anwendungsfällen nur in einer Achse, in Fig. 4 der Achse z-z wirksam sein muss, ist es angezeigt, das Konstruktionselement so auszulegen, dass es sich in seiner Achse y-y mässig durchbiegen kann ohne Schaden zu nehmen, d.h. ohne bleibende Verformung anzunehmen oder zu brechen. Zu diesem Zwecke sind die Elementkörper 2' in ihrer Ausdehnung y-y so bemessen, dass diese die nötige Flexibilität in der Achse y-y aufweisen. Durch die Verwendung eines Klebers oder Füllmaterials mit einer gewissen Elastizität können sich die Elementkörper 2' unter Einwirkung eines Biegemomentes in der Achse y-y in ihrer Längsrichtung x-x gegeneinander verschieben. Diese Massnahmen haben zur Folge, dass das erfindungsgemässe Konstruktionselement in dieser Ausführungsform in seiner Achse z-z grosse Kräfte Fz aufnehmen kann, ohne sich durchzubiegen und in seiner Achse y-y Kräfte Fy aufnehmen kann, ohne zu brechen. Es ist auch bei dieser Ausführungsvariante des erfindungsgemässen Konstruktionselementes angezeigt, eine z.B. metallene Umhüllung, gegebenenfalls aus zwei oder mehreren Kantenprofilen bestehend, vorzusehen, welch letztere den Zweck haben, die Kanten zu schützen und/oder eine genaue mechanische Führung in der Längsrichtung x-x zu bewirken und zusätzlich die Steifigkeit des Konstruktionselementes zu erhöhen.

## Ansprüche

1. Stabförmiges Konstruktionselement mit hoher Biegesteifigkeit, zumindest enthaltend einen Bauteil für die Aufnahme von Kräften bzw. Biegemomenten, dadurch gekennzeichnet, dass der Bauteil zumindest einen Kern aus Keramik oder keramikähnlichem Material enthält.

2. Konstruktionselement nach Anspruch 1, dadurch gekennzeichnet, dass mindestens zwei Elementkörper (2) mittels Vorspannmitteln (3) aus zugfestem Material in der Längsrichtung ihrer Anordnungsreihe zu einem biegesteifen Bauteil verbunden sind.

3. Konstruktionselement nach Anspruch 1, dadurch gekennzeichnet, dass die Elementkörper (2') nebeneinander angeordnet miteinander verleimt oder ähnlich miteinander verbunden sind.

4. Konstruktionselement nach Anspruch 2, dadurch gekennzeichnet, dass die Vorspannmittel (3) aus hochfestem Werkstoff bestehen.

5. Konstruktionselement nach Anspruch 2, dadurch gekennzeichnet, dass die Vorspannmittel (3) mit Einstellmitteln (5, 8) zusammenwirken, welche der Einstellung der Vorspannung der Elementkörper (2) dienen.

6. Konstruktionselement nach Anspruch 2, dadurch gekennzeichnet, dass die Elementkörper (2) und die Vorspannmittel (3) zumindest teilweise in einen Block (9) eingebettet sind.

7. Konstruktionselement nach Anspruch 6, dadurch gekennzeichnet, dass der Block (9) in einer zumindest teilweisen Umhüllung (4) angeordnet ist.

8. Konstruktionselement nach Anspruch 3, dadurch gekennzeichnet, dass die Elementkörper (2') zumindest teilweise in einer Umhüllung (4) angeordnet sind.

9. Verwendung des Konstruktionselementes nach Anspruch 1 als Schiene für Messwerkzeuge für grosse Längen.

Fig.1

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 334 092 (SKÖVDE GASBETONG AB) * Einführung; Figur 2; Seite 3, Absätze 4,5; Seite 3, Absatz 9 - Seite 4, Absatz 2 * --- | 1,2,4,5 | G 01 B 1/00 B 23 Q 11/00 E 04 C 5/08 E 04 C 3/29 |
| X | DE-A-2 723 534 (H. BORSDORF) * Einführung; Figuren 1-4; Seite 5, Absatz 2 * --- | 1,2,4,5 | |
| X | DE-A-2 759 161 (STRABAG BAU AG) * Einführung; Figuren 1-5; Seite 5, Absatz 3 - Seite 7, Absatz 4 * --- | 1,2,4 | |
| X | EP-A-0 270 487 (H. MEYER) * Figuren 1,3-8; Spalte 2, Zeilen 11-42; Spalte 3, Zeilen 15-45 * --- | 1,6,7,9 | |
| X | DE-A-2 547 897 (K. WELTE) * Einführung; Seite 9, Absatz 1 - Seite 10, Absatz 2; Seite 11, Absatz 2 - Seite 14; Figuren 1-13 * --- | 1,2,4,5 ,9 | |
| X | DE-A-3 313 155 (M. TAUPP) * Figuren 1-3; Seite 6, Zeilen 13-25; Seite 7, Zeile 5 - Seite 8, Zeile 8 * --- | 1-4,9 | RECHERCHIERTE SACHGEBIETE (Int. Cl.5) G 01 B B 23 Q F 16 L E 04 C |
| X | DE-A-3 415 197 (MESSER GRIESHEIM GmbH) * Figuren 1-3D; Seite 6, Zeile 1 - Seite 8, Zeile 5 * --- | 1,9 | |
| A | DE-A-3 344 894 (MORA FABRIK FÜR MESSGERÄTE HELMUT FREUND) * Figuren 1-7; Insgesamt * ----- | 4,5,9 | |

Der vorliegende Recherchenbericht wurde für alle Patentansprüche erstellt

| Recherchenort | Abschlußdatum der Recherche | Prüfer |
|---|---|---|
| DEN HAAG | 03-10-1989 | VISSER F.P.C. |

EPO FORM 1503 03.82 (P0403)